# EUROPEAN PATENT APPLICATION

(11) **EP 1 618 799 A1**
(43) Date of publication of application: **25.01.2006**
(21) Application number: 05106763.5
(22) Date of filing: 22.07.2005
(51) Int. Cl.: A23L 1/236, A23L 1/30, A23L 1/308, A23L 1/00, C13F 3/00

(54) **Low calorie sugar composition**

(30) Priority: 23.07.2004 IT FI20040161
(71) Applicant: Biosphere S.p.A., 47023 Cesena (Forli') (IT)
(72) Inventor: Meldoli, Maurizio, 47023, CESENA (IT); Merighi, Roberto, 45025, FRATTA POLESINE (IT)
(74) Representative: Gervasi, Gemma

(57) **Abstract**

A sweetener composition is described comprising sucrose, a product with high sweetening potency and fructo-oligosaccharides, having low calorific value and prebiotic activity.

## Description

### FIELD OF THE INVENTION

The present invention relates to the field of sweetener products, and in particular to a new sucrose based sweetener composition, having a reduced calorific value.

### STATE OF THE ART

Common sugar consists of sucrose, the most utilised natural sweetener; its calorific value is 4 kcal/g.

As an alternative to sucrose, numerous sweetener products with a lower calorific value are now commercially available, these being mainly for obese and diabetic people but also much used by the large number of people wishing to follow a low calorie diet. Of these products, saccharine has been the one most used since the 19^{th} century as a sugar substitute in food and drink, owing its diffusion to the fact that it is 300-500 times sweeter than sucrose and that it does not get metabolised by the body. Using saccharine however has the considerable drawback of a bitter metallic aftertaste following ingestion which is not always tolerated.

For this reason the industry in recent years has concentrated on researching low calorie sweeteners as alternatives to saccharine, such as maltitol or aspartame which, unlike saccharine, have no aftertaste but actually enhance the flavour qualities of the food and drink to which they are added. However, as these are artificial sweeteners they are often disliked by the consumer.

Other than the aforementioned saccharine, maltitol and aspartame, various other sweetener products are known in the food industry, either of artificial origin (such as sorbitol, mannitol, isomalt, lactitol, xylitol, acesulfame, cyclamic acid and their salts and derivatives) or of natural origin (such as thaumatin, neohesperidin and stevia rebaudiana). These sweetener products are all characterised by having a flavour particular to and characteristic of the product, in such a way that the flavour of the drink or food sweetened with these products is modified; for this reason their use is not very agreeable to many people, or even totally disliked.

Mild natural sweeteners with a lower calorific value than sucrose also include fructo-oligosaccharides (FOS), the so-called fructans, i.e. fructose derivatives formed of greater or lesser branched polymer chains of fructose units, also comprising a small area of glucose units with a degree of polymerisation between 3 and 10.

FOSs are now widely used in the human diet for their important and positive effects on the body. In this respect it has been scientifically proven that FOSs act on intestinal bacterial flora with a prebiotic action, favouring the balanced development of microbial flora and forming a protective barrier against the growth of pathogenic organisms, thus stimulating the immune system and hence also improving disease resistance.

In addition, FOSs are very well tolerated by the body, they do not promote the formation of dental caries and finally they have a calorific value lower than sucrose (2 kcal/g) and a marked hypoglycemic action, making them particularly indicated for formulating dietetic supplements or foodstuffs particularly suitable for diabetics. Therefore, in comparison with other sugars, FOSs do not negatively affect the nutritional value of the diet because they have a reduced calorific value, but actually enhance its characteristics since, as bioregulators of intestinal flora, they improve food digestion and absorption of nutritive principles.

However, in contrast to their many positive effects as aforementioned, FOSs have a sweetening potency far lower than sucrose, this being an important limitation to their use in sweetener products. On the other hand, as aforesaid, the addition of commonly used sweetener products to FOSs would in turn present the disadvantage of conferring a flavour that, however sweet, can be very different from that of common sugar.

The need was therefore felt to identify a sucrose based sweetener composition also containing a quantity of FOS that considerably reduces the calorific value of the composition and confers on it a prebiotic action, without however undermining its sweet taste in any way.

### SUMMARY OF THE INVENTION

The Applicant has now surprisingly found that adding a product with high sweetening potency to a composition comprising sucrose and FOS, a sweetener product is obtained which possesses the same sweet taste conferred by an equal weight of sucrose alone, but with a lower calorific value and a prebiotic action due to FOSs. Furthermore, the composition thus obtained does not exhibit unpleasant aftertastes.

The present invention therefore provides a low calorie sweetener composition in the form of a granular powder, comprising sucrose, fructo-oligosaccharides and a product with high sweetening potency.

The invention further provides the use of the aforesaid sweetener composition for preparing low calorie food products, and the low calorie products thus obtained.

The characteristics and advantages of the invention will be illustrated in detail in the following description.

### BRIEF DESCRIPTION OF THE FIGURES

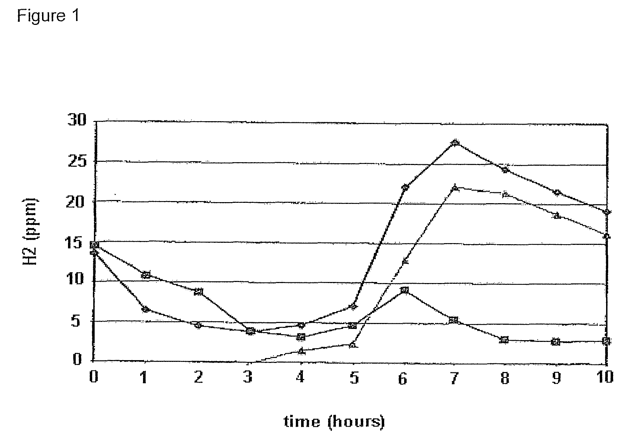

Figure 1: Graph of mean values of H₂ concentration (ppm) in expired alveolar air of 10 healthy subjects who had taken the composition of Example 1 (―•―) or the control product consisting of sucrose (―■―), as a function of time (hours). The graph also shows the variation in the difference between the mean values of H₂ concentration obtained with the composition of Example 1 and with the control consisting of sucrose (―▲―), as a function of time.

### DETAILED DESCRIPTION OF THE INVENTION

The Applicant has found that by adding a product with high sweetening potency to sucrose and FOS, a composition can be obtained that, for the same weight, has a calorific value lower by at least 30% than sucrose alone, maintains the prebiotic action of FOSs and additionally has the same sweetening potency as sucrose. Furthermore, compared with commercially available low calorie sweeteners, the sweet taste of the present composition is much better, longer lasting and similar to that of common sugar without any unpleasant aftertaste.

The term "product with high sweetening potency", within the scope of the present invention, means a product having a sweetening potency at least 100 times greater than sucrose.

The products with high sweetening potency preferably used in the invention are chosen from the group consisting of thaumatin, neohesperidin, stevia rebaudiana and mixtures thereof. Thaumatin is a mixture of proteins with high sweetening potency extracted from an African plant, *Thaumatococcus danielli*. Neohesperidin is a flavanoid present in grapefruit and bitter oranges. Stevia rebaudiana is a product extracted from the leaves of the plant bearing the same name, *Stevia rebaudiana,* a perennial shrub of the chrysanthemum family.

These natural products have a very high sweetening potency, but exhibit a distinctive and often disagreeable taste: neohesperidin, for example, has a strong bitter aftertaste. The Applicant has found however that by adding them to sucrose and FOS, a sweet tasting composition is obtained, indistinguishable from common sugar.

Within the scope of the present invention, the abbreviation FOSs or the term fructo-oligosaccharides means fructo-oligosaccharides having a mean molecular weight of between 500 and 7,000 Daltons and consisting of a number of monomer fructose units between 3 and 40.

Preferred FOS products for use in the present composition consist of inulin with high dispersibility in aqueous solution, comprising at least 9 monomer fructose units. Preferred examples of FOSs in accordance with the invention are the Sensus C.V. product known commercially as Frutafit® , and the products known commercially as Raftilose® and Raftiline® by Orafti.

According to a preferred embodiment of the invention the quantity of FOS is between 25 and 50% by weight on the total weight of the composition, while the product with high sweetening potency is in a quantity between 0.001 and 0.2% by weight on the total weight of the composition, the remainder being sucrose.

Particularly preferred is the following composition according to the invention, in which the quantities of the single components are given as percentage by weight on the total weight of the composition:

| **Component** | **% w/w** |
|---|---|
| Sucrose | 70.000 |
| FOS | 29.993 |
| Thaumatin | 0.007 |

The compositions of the invention prepared in this manner have the appearance of a white granular powder, similar to that of common sugar, have a water solubility of 67% at 20°C and a calorific value of 280 kcal per 100 g of product compared to 400 kcal for common sugar.

Furthermore, as demonstrated by the graph in Figure 1 and discussed in detail in the experimental part to follow, the sweetener composition of the present invention maintains a prebiotic activity typical of FOSs, and is therefore able to stimulate bacterial activity in the intestine. Associated with these activities, moreover, there are no undesired effects or any that may change the osmotic effect in intestinal activity, which is certainly not the case when using FOS in complex foods in which FOSs are combined with other products.

The sweetener composition of the invention can be used as a sweetener, either for adding to drinks and coffee by the consumer directly or in the industrial preparation of low calorie food products.

The following non-limiting examples of the present invention are given by way of illustration.

### EXAMPLE 1

85 mg of the thaumatin Talin of Overseal Foods Ltd, 99.92 g of the FOS Frutafit® HD and 100 g of the sugar NotaDolce "II Finissimo" of SFIR SpA were placed in a suitable mixer for about 10 minutes until completely blended. 600 g of the aforesaid sugar and 200 g of the aforesaid inulin were added to the mixture thus obtained, and stirred for about 20 minutes until completely blended.

The final product was white in appearance, homogeneous, of microcrystalline consistency and with a good sugary flavour.

### EXAMPLE 2

70 mg of the thaumatin Talin of Overseal Foods Ltd, 99.93 g of the FOS Frutafit® HD and 100 g of the sugar NotaDolce "II Finissimo" of SFIR SpA were placed in a suitable mixer for about 10 minutes until completely blended. 600 g of the aforesaid sugar and 200 g of the aforesaid inulin were added to the mixture thus obtained, and stirred for about 20 minutes until completely blended.

The final product was white in appearance, homogeneous, of microcrystalline consistency and with a good sugary flavour.

### EXAMPLE 3

85 mg of neohesperidin of Sigma-Aldrich, 99.2 g of the FOS Frutafit® HD and 100 g of the sugar NotaDolce "II Finissimo" of SFIR SpA were placed in a suitable mixer for about 10 minutes until completely blended. 800 g of the aforesaid sugar and 200 g of the aforesaid inulin were added to the aforesaid mixture, and stirred for about 20 minutes until completely blended.

The final product appeared to be white, homogeneous, of microcrystalline consistency and with a good sugary flavour.

### EXAMPLE 4

800 mg of Stevia rebaudiana of OrbisFlora, 99.2 g of the FOS Frutafit® IQ and 100 g of the sugar NotaDolce "II Finissimo" of SFIR SpA were placed in a suitable mixer for about 10 minutes until completely blended. 800 g of the aforesaid sugar and 200 g of the aforesaid inulin were added to the mixture thus obtained, and stirred for about 20 minutes until completely blended.

The final product appeared to be white, homogeneous, of microcrystalline consistency and with a good sugary flavour.

### EXAMPLE 5

1.3 g of Stevia rebaudiana of OrbisFlora, 98.7 g of the FOS Frutafit® IQ and 100 g of the sugar NotaDolce "II Finissimo" of SFIR SpA were placed in a suitable mixer for about 10 minutes until completely blended. 800 g of the aforesaid sugar and 200 g of the aforesaid inulin were added to the mixture thus obtained, and stirred for about 20 minutes until completely blended.

The final product appeared to be white, homogeneous, of microcrystalline consistency and with a good sugary flavour.

### EVALUATION OF THE CHARACTERISTICS OF THE PRESENT COMPOSITION

### 1. In vivo fermentability tests (breath-test)

The study described hereinafter was conducted with the aim of evaluating if FOSs are able to maintain their prebiotic action even if associated with sucrose and thaumatin, or another product with high sweetening potency, in the present composition.

*Principle of the method -* The method used utilises the characteristic of non-digestible carbohydrates such as FOSs of being fermented by intestinal microbial species to produce various gases among their final metabolites, such as hydrogen. Most of this gas is absorbed by the intestinal mucosa, passes into the blood system and is then eliminated by the lungs. The concentration of hydrogen in the expired alveolar air can be used as an index of intestinal fermentation activity, and is the parameter measured in the present study.

*Preparation of the test meals -* 15 g portions of the composition of Example 1 were prepared and administered after dissolving in 250 ml of hot tea, accompanied by 50 g of biscuits not containing FOSs or other non-digestible carbohydrates. As the control, a similar meal was used in which the sweetener composition of the invention was substituted by the same quantity of sucrose.

*Subjects undergoing the test -* 10 healthy volunteers were recruited, 2 males and 8 females, of average age 25.7 ± 4.16, average weight 60.2 ± 9.16 Kg and body mass index (BMI) 20.48 ± 1.86 Kg/m². In order to normalise the condition of the intestine as far as possible while testing, the diet of the subjects was controlled from dinner the evening before the test by providing a list of permitted foods, and a fast of at least 12 hours was imposed between this controlled dinner and the subsequent test breakfast.

*Execution of the test -* In the morning the subjects consumed in random order the test meal containing the composition of the invention and then, after 5 days to avoid entrainment effects, consumed the control meal containing sucrose.

Each subject acted as a control for him/herself. At fasting (time 0) and every hour for a 10 hour period, the subjects collected a sample of expired air into a plastic syringe. For the sampling a suitable system was used (GaSampler Collection System, Quintron) composed of a mouthpiece connected, via a T-shaped valve, to two different bags: one of a combination material (plastic-Al) destined for the collection of alveolar air to be analysed; the other of simple plastic, destined for discarding the first 500 ml of expired non-alveolar air which are exhaled initially but not of interest for the present analysis. The air thus collected is then withdrawn with a suitable syringe from the bag made of combination material, then analysed.

*Determination of the hydrogen in the air sample -* A CM2 microanalyzer hydrogen analyzer (Quintron) was used in which any hydrogen present in the samples is separated from other reducing gases via a suitable chromatographic column enabling hydrogen to pass and other gases to be retained. Ambient air was used as the carrier gas, conditioned by passing through a column able to remove moisture and any reducing substances.

The hydrogen thus separated is then passed through a suitable electrochemical detector which measures the quantity thereof: the instrument expresses the result directly in ppm (linearity: 0-102 ppm; sensitivity: 1 ppm). As reference a standard gas containing 102 ppm of hydrogen is used; after every 5 samples analysed the instrument was calibrated repeatedly with the standard gas until a constant value was achieved.

*Results -* From the values of H₂ concentrations (ppm) obtained with the present composition for the 10 subjects indicated with the letters A to L, the corresponding values obtained with the control for the same subject at the same time were subtracted, and the mean was calculated; the values obtained by difference and the mean were gathered into the following Table 1:

**Table 1**

| Time (hours) | 0 | 1 | 2 | 3 | 4 | 5 | 6 | 7 | 8 | 9 | 10 |
|---|---|---|---|---|---|---|---|---|---|---|---|
| A | 8 | 1 | 0 | 4 | 6 | 8 | 19 | 31 | 26 | 33 | 10 |
| B | -6 | -12 | -3 | 3 | 6 | 24 | 59 | 97 | 52 | 31 | 31 |
| C | 9 | 10 | 1 | 8 | 9 | 6 | 6 | 33 | 46 | 49 | 55 |
| D | 1 | -3 | -3 | -1 | -1 | -1 | 3 | 1 | 4 | 4 | 2 |
| E | -5 | -4 | -1 | -3 | -2 | -2 | 15 | 5 | 1 | 2 | 1 |
| F | -12 | -6 | -3 | -2 | 0 | 0 | 21 | 19 | 25 | 18 | 25 |
| G | 2 | 0 | 1 | 0 | 0 | 0 | -1 | 2 | 3 | 3 | 3 |
| H | 4 | 1 | 2 | 3 | 1 | 4 | 12 | 6 | 3 | 0 | 4 |
| I | 3 | 2 | -1 | 1 | 0 | -7 | 3 | 18 | 27 | 26 | 20 |
| L | -14 | -32 | -35 | -14 | -4 | -8 | -8 | 9 | 26 | 21 | 11 |
| MEAN | -1 | -4.3 | -4.2 | -0.1 | 1.5 | 2.4 | 12.9 | 22.1 | 21.3 | 18.7 | 16.2 |

The graph in Figure 1 shows the mean values obtained for the control and the present composition, together with the mean values of the differences calculated as described above, as a function of time. In this graph an initial peak can be observed in the progression of H₂ levels with time due to intestinal peristalsis resuming on ingestion of food, causing the residues that have accumulated during fasting to be evacuated from the small intestine; the value then tends to decline until it reaches a minimum after 3 hours. After 3-4 hours - corresponding to the oro-caecal transit time - the progression of values obtained with the controls and that of the values obtained with the composition of the invention differ, with significantly higher values for the composition of the invention due to fermentation of the FOSs introduced with the test meal.

From the study described above, it can be concluded that the FOSs present in the composition of the invention maintain unaltered their characteristics as products able to stimulate intestinal bacteria activity and also demonstrate the required properties of resistance to intestinal transit and fermentability.

### 2. Acceptability tests on the present composition

The acceptability of the composition of the invention prepared as described in Example 1 was evaluated on the same subjects, having already undergone the breath-test described above in point 1, when consumed in realistic doses and under realistic conditions, in order to show possible undesirable adverse effects associated with intestinal fermentation due to the presence of FOS.

The intestinal habits of each subject and the sensations associated with intestinal activity in the 2 days following the test described above in point 1 were ascertained by means of a questionnaire, in which the subject was asked to indicate the intensity of sensation, ranging from absence of sensation to intense sensation, on a 100 mm long linear scale.

With this, it was shown that consumption of the composition of the invention did not cause an increase in negative adverse effects associated with intestinal fermentation, such as headache, pins and needles, nausea etc., but instead gave positive effects leading to improved intestinal function, such as reduced straining on defecation and lesser consistency of faeces, without however causing diarrhoea.

## Claims

1. Low calorie sweetener composition in the form of a granular powder, comprising sucrose, fructo-oligosaccharides and a product with high sweetening potency.

2. Sweetener composition as claimed in claim 1, wherein said product with high sweetening potency is chosen from the group consisting of thaumatin, neohesperidin, stevia rebaudiana and mixtures thereof.

3. Sweetener composition as claimed in claim 2, wherein said product with high sweetening potency is thaumatin.

4. Sweetener composition as claimed in claim 1, wherein said fructo-oligosaccharides have a mean molecular weight of between 500 and 7,000 Daltons and consist of a number of monomer fructose units between 3 and 40.

5. Sweetener composition as claimed in claim 4, wherein said fructo-oligosaccharides consist of inulin with high dispersibility in aqueous solution, comprising at least 9 monomer fructose units.

6. Sweetener composition as claimed in claims 1-5, wherein the quantity of FOS is between 25 and 50% by weight on the total weight of the composition, while the product with high sweetening potency is in a quantity between 0.001 and 0.2% by weight on the total weight of the composition, the remainder being sucrose.

7. Sweetener composition as claimed in claim 6, having the following composition in which the quantities of the single components are given as percentage by weight on the total weight of the composition:
| **Component** | **% w/w** |
|---|---|
| Sucrose | 70.000 |
| FOS | 29.993 |
| Thaumatin | 0.007 |

8. Use of the sweetener composition as defined in claims 1-7, for the preparation of low calorie food products.

9. Low calorie food products comprising as sweetener the sweetener composition defined in claims 1-7.
